# EUROPÄISCHE PATENTSCHRIFT

(11) **EP 1 090 530 B1**
(45) Veröffentlichungstag und Bekanntmachung des Hinweises auf die Patenterteilung: **24.08.2005**
(21) Anmeldenummer: 99939920.7
(22) Anmeldetag: 21.06.1999
(51) Int. Cl.: H04Q 11/04, H04L 29/06

(54) **VERFAHREN ZUR AUSLASTUNGSOPTIMIERUNG VON TEILNEHMERANSCHLUSSSTRECKEN IN TELEKOMMUNIKATIONSNETZEN**
METHOD FOR OPTIMIZED UTILIZATION OF USER ACCESS LINKS IN TELECOMMUNICATION NETWORKS
PROCEDE D'OPTIMISATION DE L'EXPLOITATION DE VOIES D'ACCES POUR UTILISATEUR DANS DES RESEAUX DE TELECOMMUNICATION

(30) Priorität: 22.06.1998 DE 19827510
(43) Veröffentlichungstag der Anmeldung: 11.04.2001
(73) Patentinhaber: T-Mobile Deutschland GmbH, 53227 Bonn (DE)
(72) Erfinder: KELLER, Walter, D-67098 Bad Dürkheim (DE)
(74) Vertreter: Riebling, Peter
(86) Internationale Anmeldenummer: PCT/DE1999/001809
(87) Internationale Veröffentlichungsnummer: WO 1999/067973

(56) Entgegenhaltungen:
- EP-A- 0 687 093
- US-A- 4 698 799

## Beschreibung

Die Erfindung betrifft ein Verfahren zur Auslastungsoptimierung von Übertragungsstrecken in Telekommunikationsnetzen nach den Merkmalen des Oberbegriffs der unabhängigen Patentansprüche.

Die US-A-4 698 799 offenbart ein Verfahren zur Auslastungsoptimierung von Übertragungsstrecken zwischen Vermittlungsstellen eines burst- bzw. paketvermittelten Telekommunikationssystems. Hierbei wird zwischen mindestens zwei Vermittlungseinrichtungen eine Kommunikationsverbindung über die Übertragungsstrecke hergestellt, über die Signale oder Daten mit einer bestimmten Bandbreite oder Übertragungsrate übertragen werden können, wobei im Falle die Bandbreite, Übertragungsrate oder durchschnittliche Datenmenge pro Zeiteinheit des/der zu übertragenden Signale/Daten geringer ist als die zur Verfügung stehende Bandbreite oder Übertragungsrate von Übertragungsabschnitten der Übertragungsstrecke, die zu übertragenden Signale oder Daten in dafür vorgesehenen Einrichtungen temporär zwischengespeichert und unter Ausnutzung der zur Verfügung stehenden Bandbreite oder Übertragungsrate der Übertragungsstrecke als Datenblöcke im Burstverfahren übertragen werden.

Dieses bekannte Verfahren sieht jedoch keine Optimierung der Übertragungsstrecke zwischen Endteilnehmer bzw. dessen Datenendeinrichtung und der zuständigen Vermittlungsstelle bzw. einer anderen Datenendeinrichtung vor.

Bei der Datenübertragung zwischen zwei beteiligten Datenendeinrichtungen über ein Telekommunikationsnetz ist es aus unterschiedlichen Gründen oftmals nicht möglich, die volle zur Verfügung stehende Bandbreite bzw. Übertragungskapazität der Übertragungswege des Kommunikationsnetzes zu nutzen. Dies ist unter anderem oft im leitungsvermittelten analogen, insbesondere aber im digitalen ISDN-Fernsprechnetz der Fall, wenn weitere, die Durchsatzrate limitierende Komponenten an der Kommunikation beteiligt sind. Typisches Beispiel hierfür sind u.a. Client-Server-Verbindungen ins Internet. Hierbei ist im statistischen Mittel während einer kompletten Sitzung keine Spitzenauslastung der vorhandenen Übertragungskapazität auf beispielsweise der Teilnehmeranschlußleitung möglich, da die mittlere Datenübertragungsrate durch manuelle Bearbeitung der Client-Seite (lesen, auswählen, bearbeiten), durch technische Restriktionen der Client-Seite (Modem, Software), durch Limitierungen in Übertragungsabschnitten sowie in Verbindungsaufbauzeiten der beteiligten Telekommunikationsnetze, sowie durch technische Restriktionen auf der Serverseite (Performance, vernetzte Anwendungen, Datenbankzugriffe etc.) mitunter sehr stark reduziert ist.

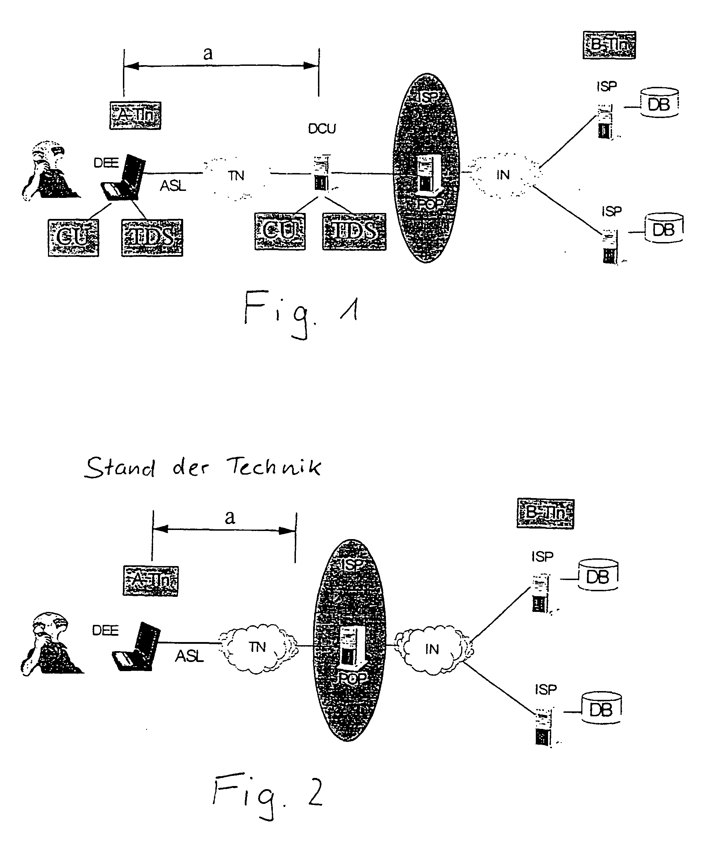

Dies verdeutlicht Figur 2, wo als Beispiel eine Verbindung zwischen einer Datenendeinrichtung DEE eines Teilnehmers A und einem Internet Service Provider ISP (Teilnehmer B) dargestellt ist. Die Datenverbindung besteht in diesem Fall aus der Teilnehmeranschlußleitung ASL, aus den Vermittlungseinrichtungen und ggf. weiteren Komponenten und Übertragungsstrecken des Telekommunikationsnetzes TN, dem Übergangspunkt (POP= Point of Presentation) des Internet Service-Providers ISP, hier Accessesprovider, ins Internet, weiterführenden Verbindungen unterschiedlicher Art und schließlich dem eigentlichen Informationsserver, beispielsweise eines anderen Internet Service Providers ISP, der Informationen aus seiner Datenbank DB anbietet. Die vorhandenen Internet-Standards (HTML-Protokoll) unterstützen sogar mehrere verknüpfte Anwendungen dieser Art, wobei zusätzliche Hyperlinks und gegenseitige Abhängigkeiten der Server die mittlere Datenrate zusätzlich reduzieren. In diesem Beispiel stellt unter anderem auch der Benutzer der Datenendeinrichtung DEE selbst eine die maximal mögliche Übertragungskapazität reduzierende Komponente dar, indem er den Datenfluß durch sein eigenes Verhalten reduziert, z.B. durch Lesen von abgerufenen Informationen online, vor Abruf von weiteren Informationen, durch unzureichende Technik o.ä. Kommt es in diesem Beispiel durch die zahlreichen Einflußfaktoren zu einer Reduktion der auf der Strecke "a" übertragenen Datenrate, die unterhalb der maximal möglichen Datenübertragungsrate des Telekommunikationsnetzes, von beispielsweise 64 kbps bei einer ISDN-Verbindung, liegt, bestehen unterschiedliche automatische Reaktionen, die durch die Datenendeinrichtungen, oder andere an der Verbindung beteiligte Komponenten durchgeführt werden können, z.B.
- Wartezeiten zwischen den einzelnen Übertragungen
- Reduktion der Datenrate durch Bitratenadaption o.ä.
- Einbau von Stopfinformation (Auffüllung von Leerinförmation)

Alle bekannten Verfahren führen dazu, das der Übertragungskanal des Telekommunikationsnetzes, insbesondere die Teilnehmeranschlußleitung, nicht optimal ausgelastet ist und der Teilnehmer letztendlich durch die leitungsvermittelte Art der Übertragung wirtschaftliche Nachteile hinnehmen muß.

Der Erfindung liegt deshalb die Aufgabe zugrunde, ein Verfahren vorzuschlagen, mit welchem die Auslastung von Übertragungsstrecken in Telekommunikationsnetzen, insbesondere der Teilnehmeranschlußleitungen, optimiert werden kann.

Diese Aufgabe wird durch die kennzeichnenden Merkmale der unabhängigen Patentansprüche gelöst.

Das erfindungsgemäße Verfahren beruht darauf, daß die zu übertragenden Signale oder Daten in dafür vorgesehenen Einrichtungen temporär zwischengespeichert und unter Ausnutzung der zur Verfügung stehenden Bandbreite oder Übertragungsrate der Übertragungsstrecke als Datenblöcke im Burstverfahren übertragen werden, jedoch nur dann, wenn die Bandbreite, Übertragungsrate oder durchschnittliche Datenmenge des/der zu übertragenden Signale/ Daten geringer ist als die zur Verfügung stehende Bandbreite oder Übertragungsrate der Übertragungsstrecke.

Insbesondere in leitungsvermittelten Übertragungsabschnitten der Übertragungsstrecke kann mittels der erfindungsgemäßen Verfahrens eine optimale Auslastung der zur Verfügung stehenden Übertragungskapazität erreicht werden.
Dabei wird der leitungsvermittelte, zu optimierende Übertragungsabschnitt nur für den Zeitraum aktiv genutzt, in welchem Signale oder Daten mit der maximal möglichen Bandbreite oder Übertragungsrate übertragen werden können, wobei der Übertragungsabschnitt in der übertragungsfreien Zeit für andere Übertragungen, z.B. von anderen Teilnehmern oder für andere Zwecke, genutzt werden kann.

Zur Bereitstellung der notwendigen Funktionen ist in der Übertragungsstrecke eine Datenkontrolleinrichtung vorgesehen, die zusammen mit einer weiteren Datenkontrolleinrichtung einen zu optimierenden Übertragungsabschnitt definiert. Die Datenkontrolleinrichtung kann vorzugsweise Teil einer Datenendeinrichtung, Vermittlungsstelle oder eines Internetservers sein.

Jede Datenkontrolleinrichtung verfügt über einen Daten-Zwischenspeicher, der das Sammeln und Abarbeiten von zusammenhängenden Datenblöcken ermöglicht, und weiterhin über eine Verbindungs- und Kontrolleinrichtung, die es im Zusammenhang mit dem Daten-Zwischenspeicher sowie einer gleichartigen kommunizierenden Gegeneinrichtung ermöglicht, die leitungsvermittelte zu optimierende Teilstrecke nur für den Zeitraum aktiv zu nutzen, wenn ein Datenpaket mit maximaler Geschwindigkeit übertragen werden kann, und in der übertragungsfreien Zeit die Teilstrecke jeweils herunterzufahren und für andere Zwecke freizugeben.

Nachfolgend wird die Erfindung anhand eines Ausführungsbeispiels unter Bezugnahme auf Zeichnungsfiguren näher erläutert. Dabei zeigt:
Figur 1: Verbindung einer Datenendeinrichtung und einem Telekommunikationsnetz gemäß der Erfindung mit optimierter Übertragungsrate;
Figur 2: Verbindung einer Datenendeinrichtung und einem Telekommunikationsnetz nach dem Stand der Technik.

In Figur 2 ist der Stand der Technik dargestellt. Es ist eine Datenverbindung zwischen einer Datenendeinrichtung und dem Internet gezeigt, wobei dieses Beispiel in der Beschreibungseinleitung ausführlich erläutert wurde.

Figur 1 zeigt nun am gleichen Beispiel eine erfindungsgemäß optimierte Übertragungsstrecke. In die Übertragungsstrecke oder einen Teilabschnitt a davon ist zwischen der Datenendeinrichtung DEE und dem Internet Service Provider ISP eine Datenkontrolleinrichtung DCU (Data Control Unit) eingeschaltet. Die Datenkontrolleinrichtung DCU überwacht den Datenverkehr über die Übertragungsstrecke und sammelt bei Datenübertragungsraten, die langsamer sind, als es die leitungsvermittelte Übertragungsstrecke zur Datenendeinrichtung DEE erlaubt, die ankommenden Daten und gibt diese als Datenpaket im Burstverfahren (z.B. Seitenweise) unter voller Ausnutzung der maximalen Übertragungskapazität der Übertragungsstrecke an die Datenendeinrichtung DEE weiter. Hierzu verfügt die Datenkontrolleinrichtung DCU über einen entsprechenden Daten-Zwischenspeicher TDS zur temporären Speicherung der zu übermittelnden bzw. weiterzuvermittelnden Daten. In umgekehrter Übertragungsrichtung, von der Datenendeinrichtung DEE abgehend, puffert die Speichereinrichtung TDS die zwischen Datenendeinrichtung DEE und Datenkontrolleinrichtung DCU im Burstverfahren übertragenen Daten und gibt diese ebenfalls bedarfsorientiert weiter.

Zwecks optimaler Ausnutzung der Telekommunikationsnetze verfügt die Datenkontrolleinrichtung DCU über eine Verbindungs- und Kontrolleinrichtung CU, womit situationsspezifisch ein Ab- und Aufbau der Verbindung zwischen Datenendeinrichtung DEE und Datenkontrolleinrichtung DCU erfolgen kann. Somit wird die leitungsvermittelte Strecke nur noch zum Zwecke der Burst-Übertragung aktiviert und in den Zwischenzeiten, in denen keine Übertragung stattfindet, deaktiviert. Die Datenkontrolleinrichtung DCU kommuniziert mit bedarfsweise vorhandenen Einrichtungen in der Datenendeinrichtung DEE, die in ihrer Funktionen der Verbindungs- und Kontrolleinrichtung DC und dem Daten-Zwischenspeicher TDS entsprechen. Insbesondere ergeben sich durch dieses Verfahren zum Beispiel bei längeren Internet-Sitzungen oder dergleichen erhebliche wirtschaftliche Vorteile sowie Auslastungsvorteile für das Kommunikationsnetz, insbesondere dann, wenn andere an der Verbindung beteiligte Komponenten sowie das Benutzungsverhalten der Teilnehmer selbst, maßgeblich die mittlere Datenübertragungsrate reduzieren. Die Datenkontrolleinrichtung DCU optimiert die Daten auf der Übertragungsabschnitt a. In anderen möglichen Ausführungsformen kann die Datenkontrolleinrichtung DCU entweder in einen Vermittlungsknoten des Telekommunikationsnetzes TN, oder in den Übergangspunkt POP funktional und/oder physikalisch integriert sein. Funktional bildet die Datenkontrolleinrichtung DCU mit der zugeordneten Datenendeinrichtung DEE, oder je nach Anwendungsfall mit einer weiteren zugeordneten Datenkontrolleinrichtung DCU oder einer anderen vergleichbaren Einrichtung, einen hinsichtlich der Auslastung optimierten Übertragungsabschnitt.
Aufgrund, daß die modernen Datenendeinrichtungen, Vermittlungsknoten, Internet-Server etc. bereits mit Mikroprozessorsteuerungen, Speichereinheiten, Anzeigedisplays etc. ausgestattet sind, lassen sich die Funktionen der Datenkontrolleinrichtung DCU, Verbindungs- und Kontrolleinrichtung CU und des Daten-Zwischenspeichers TDS mit relativ geringem Aufwand durch Ergänzung der Steuerungssoftware dieser Systeme realisieren.

### Zeichnungslegende

- DEE: Datenendeinrichtung
- TN: Telekommunikationsnetz
- ISP: Internet Service Provider
- IN: Internet
- DB: Datenbank
- POP: Übergangspunkt (Point of Presentation)
- A-Tln: A-Teilnehmer
- B-Tln: B-Teilnehmer
- ASL: Anschlußleitung
- DCU: Datenkontrolleinrichtung
- CU: Verbindungs- und Kontrolleinrichtung
- TDS: Daten-Zwischenspeicher

## Patentansprüche

1. Verfahren zur Auslastungsoptimierung von Übertragungsstrecken in Telekommunikationsnetzen (TN), wobei zwischen mindestens zwei Kommunikationseinrichtungen (DEE, ISP) eine Kommunikationsverbindung über die Übertragungsstrecke hergestellt wird, über die Signale oder Daten mit einer bestimmten Bandbreite oder Übertragungsrate übertragen werden, wobei im Falle die Bandbreite, Übertragungsrate oder durchschnittliche Datenmenge pro Zeiteinheit des/der zu übertragenden Signale/ Daten geringer ist als die zur Verfügung stehende Bandbreite oder Übertragungsrate von Übertragungsabschnitten (a) der Übertragungsstrecke, die zu übertragenden Signale oder Daten in dafür vorgesehenen Einrichtungen (TDS) temporär zwischengespeichert und unter Ausnutzung der zur Verfügung stehenden Bandbreite oder Übertragungsrate der Übertragungsstrecke als Datenblöcke im Burstverfahren übertragen werden, **dadurch gekennzeichnet,**
**daß** die Auslastungsoptimierung in leitungsvermittelten Übertragungsabschnitten einer Teilnehmeranschlussleitung (ASL) zwischen einer Datenendeinrichtung (DEE) und einer zweiten Kommunikationseinrichtung (ISP) vorgenommen wird, wobei die leitungsvermittelte Strecke nur zum Zwecke der Burst-Übertragung aktiviert und in den Zwischenzeiten, in denen keine Übertragung stattfindet, deaktiviert wird.

2. Verfahren nach Anspruch 1, **dadurch gekennzeichnet, daß** der leitungsvermittelte zu optimierende Übertragungsabschnitt (a) nur für den Zeitraum aktiv genutzt wird, in dem Signale oder Daten mit der maximal möglichen Bandbreite oder Übertragungsrate übertragen werden können, und in der übertragungsfreien Zeit für andere Übertragungen genutzt werden kann.

3. Vorrichtung zur Auslastungsoptimierung von Übertragungsstrecken in Telekommunikationsnetzen, welche so ausgestaltet ist, daß zwischen mindestens zwei Kommunikationseinrichtungen (DEE ISP) eine Kommunikationsverbindung über die Übertragungsstrecke hergestellt wird, über die Signale oder Daten mit einer bestimmten Bandbreite oder Übertragungsrate übertragen werden, wobei innerhalb der gesamten Übertragungsstrecke eine Datenkontrolleinrichtung (DCU) vorgesehen ist, die zusammen mit einer weiteren Datenkontrolleinrichtung (DCU) oder einer Datenendeinrichtung (DEE) einen zu optimierenden Übertragungsabschnitt (a) bildet, wobei die Datenkontrolleinrichtung (DCU) eine Verbindungs- und Kontrolleinrichtung (CU) und einen Daten-Zwischenspeicher (TDS) umfasst, und eine gleichartig kommunizierende Gegeneinrichtung (CU) vorgesehen ist,
**dadurch gekennzeichnet,**
**daß** der Übertragungsabschnitt (a) Teil einer Teilnehmeranschlussleitung (ASL) zwischen der Datenendeinrichtung (DEE) und einer zweiten Kommunikationseinrichtung (ISP) ist, wobei die Datenkontrolleinrichtung (DCU) so ausgestaltet ist, daß die leitungsvermittelte, zu optimierende Teilstrecke nur für den Zeitraum aktiviert ist, wenn ein Datenpaket mit maximaler Geschwindigkeit übertragen wird, und in der übertragungsfreien Zeit die Teilstrecke jeweils herunterfährt und für andere Zwecke freigibt.

4. Vorrichtung nach Anspruch 3, **dadurch gekennzeichnet, daß** die Datenkontrolleinrichtung (DCU) Teil der Datenendeinrichtung (DEE) ist.

5. Vorrichtung nach einem der Ansprüche 3 oder 4, **dadurch gekennzeichnet, daß** der Daten-Zwischenspeicher (TDS) das Sammeln und Abarbeiten von zusammenhängenden Datenblöcken ermöglicht.

## Claims

1. Method for optimising the capacity utilisation of transmission zones in telecommunications networks (TN), wherein between at least two communications devices (DTE, ISP) a communications link is made via the transmission zone via which signals or data are transmitted with a given bandwidth or transmission rate, wherein, in the event that the bandwidth, transmission rate or average data set per unit time of the signals/data to be transmitted is lower than the available bandwidth or transmission rate of transmission sections (a) of the transmission zone, the signals or data to be transmitted are temporarily stored in devices provided therefor (TDS) and, using the available bandwidth or transmission rate of the transmission zone, transmitted as data blocks by the burst method, **characterised in that** optimisation of capacity utilisation is carried out in line-switched transmission sections of a subscriber loop (ASL) between data terminal equipment (DTE) and a second communications device (ISP), wherein the line-switched zone is activated only for the purpose of burst transmission and deactivated in the intervals in which no transmission takes place.

2. Method according to claim 1, **characterised in that** the line-switched transmission section (a) to be optimised is actively used only for the period in which signals or data can be transmitted with the maximum possible bandwidth or transmission rate, and can be used in the transmission-free time for other transmissions.

3. Apparatus for optimising the capacity utilisation of transmission zones in telecommunications networks, which is designed in such a way that between at least two communications devices (DTE, ISP) a communications link is made via the transmission zone via which signals or data are transmitted with a given bandwidth or transmission rate, wherein within the whole transmission zone there is provided a data control unit (DCU) which together with a further data control unit (DCU) or data terminal equipment (DTE) forms a transmission section (a) to be optimised, wherein the data control unit (DCU) includes a link and control unit (CU) and a temporary data store (TDS), and a counter-unit (CU) communicating in the same way is provided, **characterised in that** the transmission section (a) forms part of a subscriber loop (ASL) between the data terminal equipment (DTE) and a second communications device (ISP), wherein the data control unit (DCU) is designed in such a way that the line-switched partial zone to be optimised is activated only for the period when a data packet is transmitted at maximum speed, and in the transmission-free period respectively shuts down the partial zone and clears it for other purposes.

4. Apparatus according to claim 3, **characterised in that** the data control unit (DCU) forms part of the data terminal equipment (DTE).

5. Apparatus according to one of claims 3 or 4, **characterised in that** the temporary data store (TDS) enables the collection and execution of connected data blocks.

## Revendications

1. Procédé pour optimiser l'utilisation de lignes de transmission dans des réseaux de télécommunication (TN), selon lequel on réalise entre au moins deux dispositifs de communication (DEE, ISP), par l'intermédiaire de la ligne de transmission, une liaison de communication grâce à laquelle des signaux ou des données sont transmis avec une largeur de bande ou une vitesse de transmission définie, étant précisé qu'au cas où la largeur de bande, la vitesse de transmission ou la quantité de données moyenne par unité de temps du ou des signaux/des données à transmettre est inférieure à la largeur de bande ou à la vitesse de transmission disponible de sections de transmission (a) de la ligne de transmission, les signaux ou les données à transmettre sont stockés temporairement dans des dispositifs (TDS) prévus à cet effet et sont transmis par salves sous la forme de blocs de données en utilisant la largeur de bande ou la vitesse de transmission disponible de la ligne de transmission, **caractérisé en ce que** l'optimisation d'utilisation est réalisée dans des sections de transmission à commutation de circuits d'une ligne de raccordement d'abonné (ASL) entre un dispositif terminal de données (DEE) et un second dispositif de communication (ISP), la ligne à commutation de circuits n'étant activée qu'en vue de la transmission par salves et étant désactivée dans les intervalles où il n'y a pas de transmission.

2. Procédé selon la revendication 1, **caractérisé en ce que** la section de transmission (a) à commutation de circuits à optimiser n'est utilisée de manière active que pour le laps de temps où des signaux ou des données peuvent être transmis avec la largeur de bande ou la vitesse de transmission maximale possible, alors que pendant la durée sans transmission, elle peut être utilisée pour d'autres transmissions.

3. Dispositif pour optimiser l'utilisation de lignes de transmission dans des réseaux de télécommunication, qui est conçu pour réaliser entre au moins deux dispositifs de communication (DEE, ISP), par l'intermédiaire de la ligne de transmission, une liaison de communication grâce à laquelle des signaux ou des données sont transmis avec une largeur de bande ou une vitesse de transmission définie, étant précisé qu'à l'intérieur de toute la ligne de transmission, il est prévu un dispositif de contrôle de données (DCU) qui forme avec un autre dispositif de contrôle de données (DCU) ou avec un dispositif terminal de données (DEE) une section de transmission (a) à optimiser, le dispositif de contrôle de données (DCU) comprenant un dispositif de liaison et de contrôle (CU) et une mémoire intermédiaire de données (TDS), et un dispositif opposé (CU) qui communique de la même manière étant prévu,
**caractérisé en ce que** la section de transmission (a) fait partie d'une ligne de raccordement d'abonné (ASL) entre le dispositif terminal de données (DEE) et un second dispositif de communication (ISP), le dispositif de contrôle de données (DCU) étant conçu pour que la ligne partielle à circuits de commutation qui doit être optimisée ne soit activée que pour le laps de temps où un paquet de données est transmis à une vitesse maximale, et pour que pendant la durée sans transmission, elle descende et soit libérée pour d'autres fonctions.

4. Dispositif selon la revendication 3, **caractérisé en ce que** le dispositif de contrôle de données (DCU) fait partie du dispositif terminal de données (DEE).

5. Dispositif selon la revendication 3 ou 4, **caractérisé en ce que** la mémoire intermédiaire de données (TDS) permet de réunir et de traiter des blocs de données connexes.
